# EUROPEAN PATENT APPLICATION

(11) **EP 1 585 315 A1**
(43) Date of publication of application: **12.10.2005**
(21) Application number: 03706955.6
(22) Date of filing: 18.02.2003
(51) Int. Cl.: H04N 5/222, H04N 5/225

(54) **SMALL AUTOMATIC MOTION CONTROL PHOTOGRAPHING SYSTEM**

(30) Priority: 16.01.2003 JP 2003008257
(71) Applicant: NTT Infrastructure Network Corporation, Tokyo 103-0007 (JP)
(72) Inventor: SUGIURA, Shinichi, NTT Infrastructure Network Corp, Tokyo 103-0007 (JP); OTSUKI, Kazuhiro, NTT Infrastructure Network Corp, Tokyo 103-0007 (JP); NISHIWAKI, Ken, NTT Infrastructure Network Corp., Tokyo 103-0007 (JP)
(74) Representative: Poulin, Gérard
(86) International application number: PCT/JP2003/001722
(87) International publication number: WO 2004/064390

(57) **Abstract**

A compact automatic motion control photographing device includes a table supported rotatably to at least a single direction; a servo motor for producing a driving force for rotating the table; and a driving force transmitting mechanism for transmitting the driving force produced by the servo motor to the table, wherein the table is rotated towards a single direction and is stopped every time the table has rotated by a predetermined quantity of rotation, so as to perform photographing using a digital camera fastened to the table. Such a compact automatic motion control photographing device has superior portability, by which panoramic photographing can be easily performed by mounting a camera.

## Description

### TECHNICAL FIELD

The present invention relates to a compact automatic motion control photographing device in which a camera is supported and rotated so as to photograph a panoramic picture.

The present application is based on Japanese Patent Application No. 2003-8257, the content of which is incorporated herein by reference.

### BACKGROUND ART

In order to take a picture with a wide field of view, that is, a panoramic picture, a series of pictures is taken while rotating the camera in a direction in which the field of view spreads, and the pictures are joined with each other.

A known document discloses a compact automatic motion control photographing device which includes a camera attached to a tripod in a freely rotatable form, a computer for processing image data output from the camera, a CRT display for displaying a panoramic image based on the image processed by the computer, a printer for outputting a hard copy of the panoramic image, and a disk driver for storing image data of the panoramic image processed by the computer to a magnetic recording medium. In the motion control photographing device, a subject is photographed by freely rotating the camera through 360°. However, the compact automatic motion control photographing device is used while connecting the camera to devices such as the computer and the like, that is, the photographing device has not been designed on a concept of carrying and easily taking photos (see Japanese Unexamined Patent Application, First Publication No. H06-189180, pp. 3-5, Fig. 1).

On the other hand, with the recent spread of digital cameras, panoramic pictures can be easily produced by processing digital images by using a personal computer. However, it is very difficult to easily and precisely take a series of photos by which a panoramic picture is produced, and there were no alternate devices for performing such a difficult operation.

### DISCLOSURE OF INVENTION

In consideration of the above circumstances, an object of the present invention is to provide a compact automatic motion control photographing device having superior portability, by which panoramic photographing can be easily performed by mounting a camera.

In order to solve the problem, the present invention employs the following devices.

The first mode of the present invention provides a compact automatic motion control photographing device comprising:
a camera fastening device supported rotatably to at least a single direction;
a servo motor for producing a driving force for rotating the camera fastening device; and
a driving force transmitting mechanism for transmitting the driving force produced by the servo motor to the camera fastening device, wherein:
   the camera fastening device is rotated towards a single direction and is stopped every time the camera fastening device has rotated by a predetermined quantity of rotation, so as to perform photographing using a camera fastened to the camera fastening device.

In the second mode of the present invention, the driving force transmitting mechanism of the compact automatic motion control photographing device relating to the first mode is coupled with a timing belt.

The third mode of the present invention provides a compact automatic motion control photographing device comprising:
a camera fastening device which is rotatably supported;
a servo motor for producing a driving force for rotating the camera fastening device; and
a control unit for:
   measuring a direction and a quantity of rotation from a reference position of a driving shaft of the servo motor when a power source is supplied to the servo motor, based on measured results of a rotational quantity measuring device, and
   rotating the driving shaft so as to make the driving shaft return to the reference position, in accordance with the measured direction and quantity of rotation..

In the present invention, the camera fastening device to which a camera is fastened is rotated towards a single direction and is stopped every time the camera fastening device has rotated by a predetermined quantity of rotation, so as to perform photographing every time the camera fastening device is stopped. Accordingly, a series of photos for producing a panoramic picture can be taken automatically rather than manually. As specific effects obtained by the present invention, the photos, taken by the compact automatic motion control photographing device fastened by a tripod or the like, are images which are separate with each other at regular intervals along a direction in which the field of view spreads. In addition, each photo has no deflection in the vertical direction and can produce a beautiful finish as a processed panoramic picture.

### BRIEF DESCRIPTION OF THE DRAWINGS

Fig. 1 is a perspective view of the compact automatic motion control photographing device in an embodiment according to the present invention, seen from the front.
Fig. 2 is a perspective view of a part of the internal structure of the compact automatic motion control photographing device in the embodiment according to the present invention.
Fig. 3 is a perspective view of the compact automatic motion control photographing device in the embodiment according to the present invention, seen from the back.
Fig. 4 is a perspective view of the compact automatic motion control photographing device in the embodiment according to the present invention, seen from the back.
Fig. 5 is a block diagram for showing control or driving of the compact automatic motion control photographing device in the embodiment according to the present invention.

### BEST MODE FOR CARRYING OUT THE INVENTION

Hereinbelow, an embodiment of the present invention will be explained with reference to the drawings.

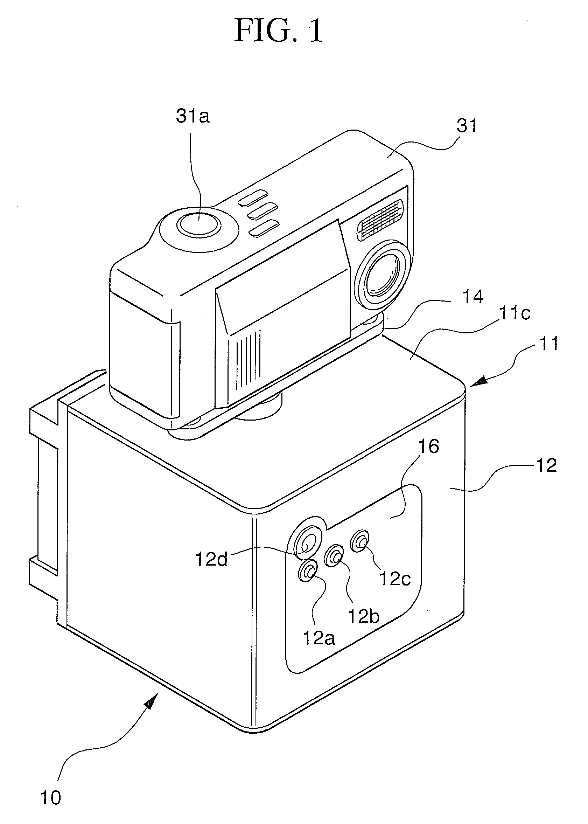

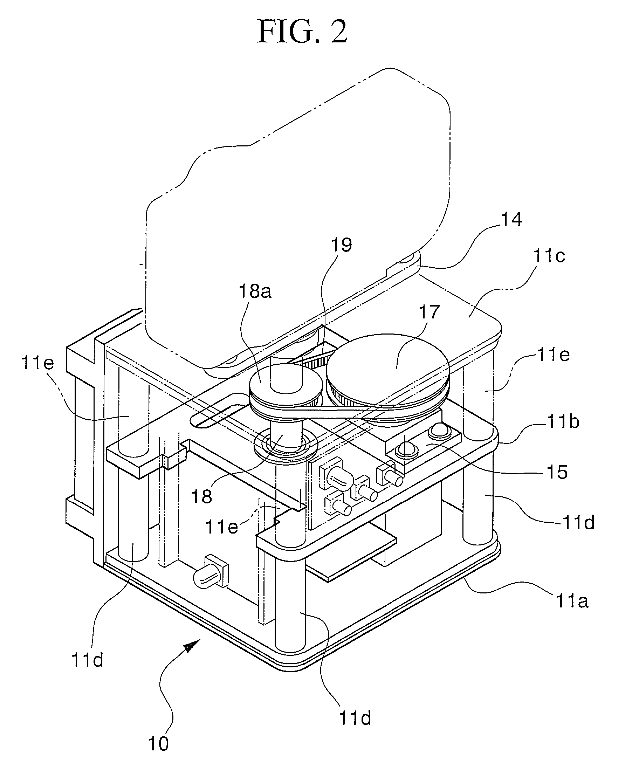

As shown in Fig. 1, a main body 11 of a compact automatic motion control photographing device 10 has a substantially rectangular parallelepiped shape, and a detachable cover 12 is attached to the front and side faces of the main body. As shown in Fig. 2, a bottom plate 11a, a center plate 11b, and an upper plate 11c, each having a substantially square shape, are respectively provided at the bottom, a center portion, and an upper portion of the main body 11. A plurality of supporting columns 11d are provided between the bottom plate 11a and the center plate 11b, where the columns 11d stand on the bottom plate 11a and support the center plate 11b. A plurality of supporting columns 11e are provided between the center plate 11b and the upper plate 11c, where the columns 11e stand on the center plate 11b and support the upper plate 11c.

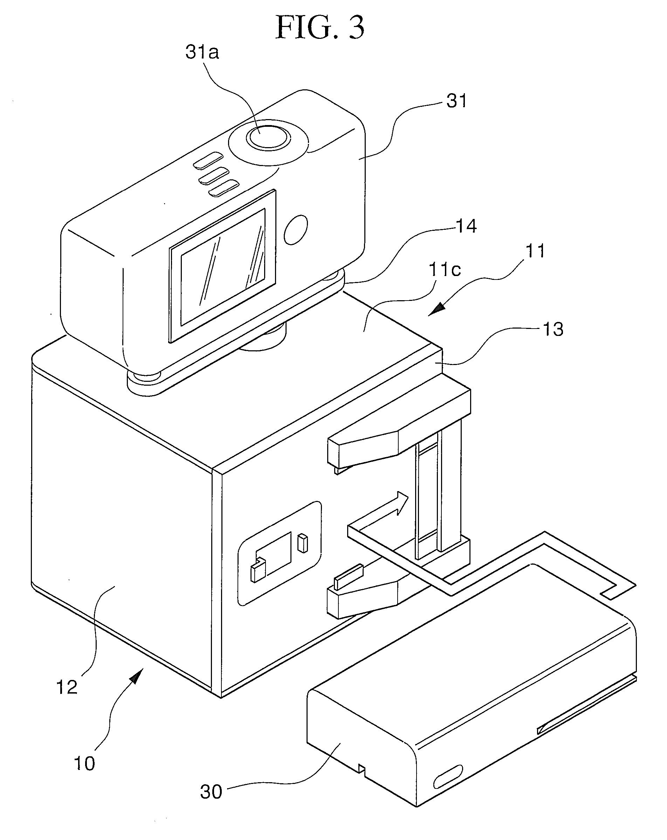

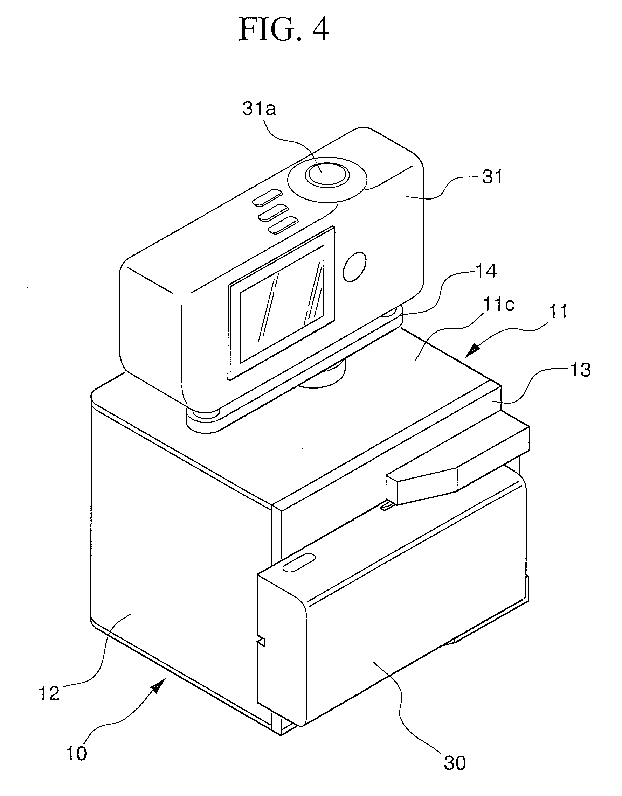

As shown in Fig. 3, a wall 13 is formed on the back face of the main body 11, in a manner such that an external battery 30 as a power source, such as a lithium ion battery, can be detachably attached to the wall 13. The battery 30 is mounted to the wall 13 as shown in Fig. 4.

Here, the general outer dimensions of the main body 11 except for the battery 30 are: width: 70 mm, height: 58 mm, and length 58 mm.

On the upper portion of the main body 11, a table 14 to which a digital camera 31 for performing panoramic photographing is fastened (i.e., the camera fastening device) is provided. The table 14 is fixed to the upper end of a rotating shaft 18, where the lower end and a middle portion of the rotating shaft 18 are respectively supported by the center plate 11b and the upper plate 11c in a freely rotatable form, and an upper end portion of the rotating shaft 18 protrudes from the upper plate 11c. The table 14 has a plate shape having a flat upper face, and a through hole is formed in the thickness direction. The digital camera 31 can be fastened by passing a bolt through the through hole and screwing the bolt into a threaded hole which is formed in the lower face of the digital camera 31 so as to fix the camera to the tripod.

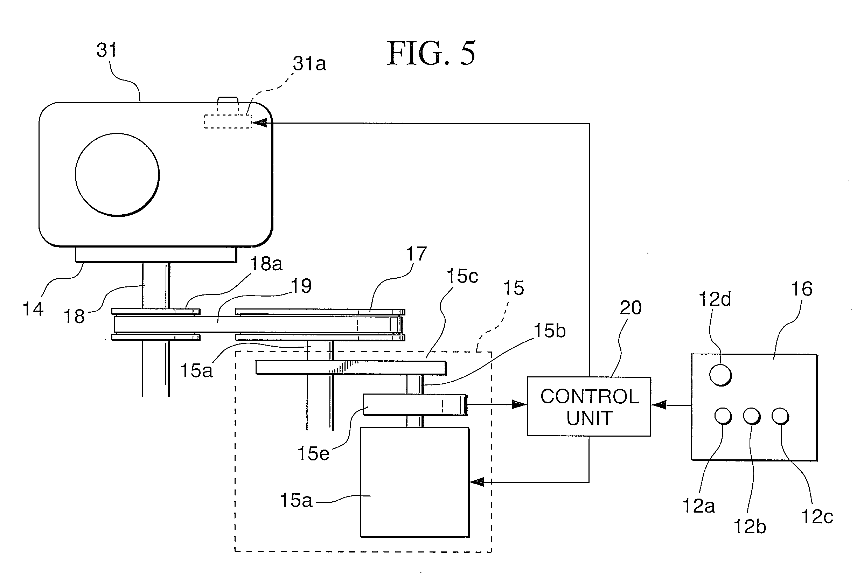

To the center plate 11b, a servo motor unit 15 is attached, which includes a servo motor 15a for generating driving force for rotating the rotating shaft 18 together with the table 14. As shown in Fig. 5, except for the servo motor 15a, the servo motor unit 15 has a gear mechanism 15c for reducing the rotation speed of the output shaft 15b of the servo motor 15a so as to increase the torque, a driving shaft 15d for extracting rotation of the output shaft 15b whose torque has been increased by the gear mechanism 15c, and a potentiometer 15e (i.e., the rotational quantity measuring device) for measuring a direction and a quantity of rotation of the output shaft 15b from a reference position.

A driving pulley 17 is mounted to the driving shaft 15d of the servo motor unit 15, and a driven pulley 18a is mounted to the rotating shaft 18. A toothed timing belt 19 having a gear is hung between the driving pulley 17 and the driven pulley 18a. The speed ratio between the driving pulley 17 and the driven pulley 18a is 1:2, so that the quantity of rotation of the driving shaft 15d is doubled and transmitted to the rotating shaft 18 (here, the gear mechanism 15c, the driving shaft 15d, and the timing belt 19 hung between the driving pulley 17 and the driven pulley 18a construct a driving force transmission mechanism for transmitting driving force of the servo motor 15a to the table 14).

In the main body 11, a control unit 20 is provided for controlling the servo motor 15a and operating a shutter mechanism 31 a of the digital camera 31. On the front face of the cover 12, an input section 16 for supplying a power source to the servomotor 15a and the control unit 20 and for selecting a photographing operation pattern. The input section 16 has three buttons 12a, 12b, and 12c, and a lamp 12d is provided above the buttons 12a, 12b, and 12c, which lights when the power source is switched on.

The control unit 20 is connected to each of the buttons 12a, 12b, and 12c of the input section 16, the servo motor 15a, and the potentiometer 15e. The control unit 20 is also connected to the shutter mechanism 31a of the digital camera 31 so as to operate the shutter mechanism 31a by sending an electrical signal to the shutter mechanism.

Below, the method of photographing using the compact automatic motion control photographing device 10 having the above structure will be explained.

First, as shown in Fig. 3, the battery 30 is mounted in a direction indicated by an arrow, so as to secure the power source for the compact automatic motion control photographing device 10. In the present embodiment, the power source is secured by the battery 30 but is not limited to the battery 30. For example, when the compact automatic motion control photographing device 10 is fixed in an indoor area, the power source may be secured by connecting an AC adapter.

After securing the power source, the power source is switched on by pushing the button 12a. When switching on the power source, the lamp 12d lights, and the potentiometer 15e measures the direction and the quantity of rotation of the output shaft 15d from the reference position and outputs measured results, which correspond to a difference from the reference position, to the control unit 20. Based on the measured results by the potentiometer 15e, the control unit 20 drives the servo motor 15a so as to make the output shaft 15b return to the reference position. When the servo motor 15a is driven, the table 14 on which the digital camera 31 is mounted rotates, so that the front face of the digital camera 31 coincides with the front face of the main body 11 of the compact automatic motion control photographing device 10 (this position is decided as the initial position of the digital camera 31).

Next, the quantity of rotation between each shot taken by the digital camera 31 is determined. In the present embodiment, the quantity of rotation between each shot is initially set to 30°, and in order to change the quantity of rotation to 20°, the buttons 12a and 12c are simultaneously pushed. On the other hand, in order to perform flash photographing, the buttons 12a and 12b are simultaneously pushed.

In the next step, the spread angle in which the panoramic picture spreads is determined. In the present embodiment, the spread angle is set to 60° when the button 12a is pushed, the spread angle is set to 180° when the button 12b is pushed, and the spread angle is set to 360° when the button 12c is pushed,

As explained above, a desired photographing operation pattern is input by operating the three buttons 12a, 12b, and 12c. In addition, when one of the three buttons 12a, 12b, and 12c is pushed for setting the spread angle for the panoramic picture, the pushing action is a trigger for starting the panoramic photographing. Below, a case in which the quantity of rotation between each shot is set to 30° and the spread angle is set to 360° will be explained.

When start of the panoramic photographing is designated, the control unit 20 drives the servo motor 15a so as to rotate the digital camera 31 from the initial position to the left direction by 90° and to fix the position of the camera. The control unit then operates the shutter mechanism 31a of the digital camera 31 so as to take the first photo. When the servo motor 15a is driven, the rotation of the output shaft 15b is transmitted via the gear mechanism 15c to the driving shaft 15d. The rotation of the driving shaft 15d is then transmitted via the driving pulley 17, the timing belt 19, and the driven pulley 18a to the rotating shaft 18, so that the table 14 on which the digital camera 31 is mounted rotates. In the servo motor unit 15, the quantity of rotation of the output shaft 15b is always measured by the potentiometer 15e, and when the output shaft 15b has rotated by a quantity necessary for rotating the table 14 by 90°, the output shaft 15b is stopped at that position.

Next, the control unit 20 drives the servo motor 15a so as to rotate the digital camera 31 to the right direction by 30° and then stops the rotation. The control unit 20 then operates the shutter 31a of the digital camera 31 so as to take the second shot. The above operation is repeated so as to take the third shot, the fourth shot, etc. When the digital camera 31 has rotated from the initial position to the right direction by 240° and the twelfth photo has been taken, the control unit 20 drives the servo motor 15a so as to rotate the digital camera 31 to the left direction by 240° and to make the camera return to the initial position and stop there.

When the photographing has been completed, image data stored in a memory provided in the digital camera 31 are transferred to a personal computer, and the data are processed so as to produce a panoramic picture by using a specialized software.

In the compact automatic motion control photographing device 10 having the above structure, the servo motor unit 15 having small volume and weight is employed, which includes a compact servo motor 15a having low power consumption and producing a large torque; therefore, the photographing device 10 itself is small and light.

In addition, in the photographing process, the table 14 is rotated in a single direction; thus, a problem involved in the gear mechanism 15c of the servo motor unit 15, that is, deflection in the quantity of rotation due to backlash, can be prevented, so that all of the taken shots are separated in regular intervals along a direction in which the field of view spreads. Furthermore, the belt transmission mechanism having the toothed timing belt 19 is coupled with the driving force transmitting mechanism; thus, the driving force is transmitted without loss, which also contributes towards preventing deflection in the quantity of rotation.

Additionally, even if the table 14 is rotated by receiving external force, which is produced by switching off the power source, and the digital camera 31 is not positioned at the initial position, the servo motor is driven when the power source is switched on so that the digital camera 31 returns to the initial position. Therefore, it is easy to determine the angle in photographing.

According to the compact automatic motion control photographing device 10 having the above structure, a series of photos for producing a panoramic picture can be taken automatically rather than manually. The photos, taken by the compact automatic motion control photographing device 10 fastened by a tripod or the like, are images which are separate with each other at regular intervals along a direction in which the field of view spreads. In addition, each photo has no deflection in the vertical direction and can produce a beautiful finish as a processed panoramic picture.

In the present embodiment, the buttons 12a, 12b, and 12c, and the lamp 12d arranged in the cover 12 are positioned in the front of the main body 11, and the wall 13 and the battery 30 attached to the wall 13 are positioned at the back face of the main body 11. However, the members at the front side and the members at the back side may be oppositely positioned to each other. That is, the buttons 12a, 12b, and 12c, and the lamp 12d arranged in the cover 12 may be on the back face of the main body 11, and the wall 13 and the battery 30 attached to the wall 13 may be positioned in the front of the main body 11.

In this case, the quantity and the angle of rotation can be set while the photographer directly views the subject for panoramic photograph from the back of the digital camera 31.

### INDUSTRIAL APPLICABILITY

As explained above, according to the present invention, it is possible to provide a compact automatic motion control photographing device having superior portability, by which panoramic photographing can be easily performed by mounting a camera.

## Claims

1. A compact automatic motion control photographing device comprising:
a camera fastening device supported rotatably to at least a single direction;
a servo motor for producing a driving force for rotating the camera fastening device; and
a driving force transmitting mechanism for transmitting the driving force produced by the servo motor to the camera fastening device, wherein:
the camera fastening device is rotated towards a single direction and is stopped every time the camera fastening device has rotated by a predetermined quantity of rotation, so as to perform photographing using a camera fastened to the camera fastening device.

2. A compact automatic motion control photographing device as claimed in claim 1, wherein the driving force transmitting mechanism is coupled with a timing belt.

3. A compact automatic motion control photographing device comprising:
a camera fastening device which is rotatably supported;
a servo motor for producing a driving force for rotating the camera fastening device; and
a control unit for:
measuring a direction and a quantity of rotation from a reference position of a driving shaft of the servo motor when a power source is supplied to the servo motor, based on measured results of a rotational quantity measuring device, and
rotating the driving shaft so as to make the driving shaft return to the reference position, in accordance with the measured direction and quantity of rotation..
